# EUROPEAN PATENT SPECIFICATION

(11) **EP 3 040 709 B1**
(45) Date of publication and mention of the grant of the patent: **08.07.2020**
(21) Application number: 15203018.5
(22) Date of filing: 29.12.2015
(51) Int. Cl.: G01N 21/65, G01J 3/44, G01J 3/02, G01J 3/08, G01N 21/90

(54) **LIQUID OBJECT IDENTIFICATION APPARATUS AND METHOD**
VORRICHTUNG UND VERFAHREN ZUR IDENTIFIKATION EINES FLÜSSIGEN OBJEKTES
APPAREIL D'IDENTIFICATION D'OBJET DE LIQUIDE ET PROCÉDÉ

(30) Priority: 31.12.2014 CN 201410854187
(43) Date of publication of application: 06.07.2016
(73) Proprietor: Nuctech Company Limited, TongFang Building, Shuangqinglu, Haidian District Beijing 100084 (CN)
(72) Inventor: ZHANG, Jianhong, 100084 Beijing (CN); ZHANG, Li, 100084 Beijing (CN); WANG, Hongqiu, 100084 Beijing (CN)
(74) Representative: Dunlop, Hugh Christopher

(56) References cited:
- WO-A1-2014/060983
- CN-U- 203 929 643
- CN-U- 204 314 222
- US-A1- 2002 067 163
- US-B1- 6 456 067
- FRISBY ALEX ET AL: "Spatially offset Raman spectroscopy (SORS) for through-barrier proximal chemical and explosive detection", OPTICS AND PHOTONICS FOR COUNTERTERRORISM AND CRIME FIGHTING VII; OPTICAL MATERIALS IN DEFENCE SYSTEMS TECHNOLOGY VIII; AND QUANTUM-PHYSICS-BASED INFORMATION SECURITY, SPIE, 1000 20TH ST. BELLINGHAM WA 98225-6705 USA, vol. 8189, no. 1, 6 October 2011 (2011-10-06), pages 1-14, XP060010229, DOI: 10.1117/12.898611
- LEE LINDA ET AL: "Through-barrier detection of explosive components for security screening applications", OPTICS AND PHOTONICS FOR COUNTERTERRORISM AND CRIME FIGHTING VII; OPTICAL MATERIALS IN DEFENCE SYSTEMS TECHNOLOGY VIII; AND QUANTUM-PHYSICS-BASED INFORMATION SECURITY, SPIE, 1000 20TH ST. BELLINGHAM WA 98225-6705 USA, vol. 8189, no. 1, 6 October 2011 (2011-10-06), pages 1-15, XP060010243, DOI: 10.1117/12.898608
- LOEFFEN PAUL W ET AL: "Spatially offset Raman spectroscopy (SORS) for liquid screening", OPTICS AND PHOTONICS FOR COUNTERTERRORISM AND CRIME FIGHTING VII; OPTICAL MATERIALS IN DEFENCE SYSTEMS TECHNOLOGY VIII; AND QUANTUM-PHYSICS-BASED INFORMATION SECURITY, SPIE, 1000 20TH ST. BELLINGHAM WA 98225-6705 USA, vol. 8189, no. 1, 6 October 2011 (2011-10-06), pages 1-10, XP060010230, DOI: 10.1117/12.898109 [retrieved on 1901-01-01]

## Description

### BACKGROUND OF THE INVENTION

### Field of the Invention

The present disclosure relates to the field of liquid identification, in particular to a liquid object identification apparatus and a liquid object identification method.

### Description of the Related Art

A Raman spectrum may be used to identify substances, for example a liquid object, due to its property of fingerprints. However, the liquid object is typically contained in a certain package due to the limitation of its properties. The package of the liquid object may disturb the identification of the Raman spectrum to some extent. In practice, it often is not available to remove the package and to inspect the liquid object therein. Further, various packages will have different effects on the inspection of the Raman spectrum. At present, the apparatus or method for identifying the liquid object that can be used for various kinds of packages has not been proposed.

The article of FRISBY ALEX ET AL: "Spatially offset Raman spectroscopy (SORS) for through-barrier proximal chemical and explosive detection", OPTICS AND PHOTONICS FOR COUNTERTERRORISM AND CRIME FIGHTING VII; OPTICAL MATERIALS IN DEFENCE SYSTEMS TECHNOLOGY VIII; AND QUANTUM-PHYSICS-BASED INFORMATION SECURITY, SPIE, 1000 20TH ST. BELLINGHAM WA 98225-6705 USA, vol. 8189, no. 1, 6 October 2011 (2011-10-06), pages 1-14, DOI: 10.1117/12.898611 discusses spatially offset Raman spectroscopy (SORS) for through-barrier proximal chemical and explosive detection.

The article of LEE LINDA ET AL: "Through-barrier detection of explosive components for security screening applications", OPTICS AND PHOTONICS FOR COUNTERTERRORISM AND CRIME FIGHTING VII; OPTICAL MATERIALS IN DEFENCE SYSTEMS TECHNOLOGY VIII; AND QUANTUM-PHYSICS- BASED INFORMATION SECURITY, SPIE, 1000 20TH ST. BELLINGHAM WA 98225-6705 USA, vol. 8189, no. 1,6 October 2011 (2011-10-06), pages 1-15, DOI: 10.1117/12.898608 discusses through-barrier detection of explosive components for security screening applications.

The article of LOEFFEN PAUL W ET AL: "Spatially offset Raman spectroscopy (SORS) for liquid screening", OPTICS AND PHOTONICS FOR COUNTERTERRORISM AND CRIME FIGHTING VII; OPTICAL MATERIALS IN DEFENCE SYSTEMS TECHNOLOGY VIII; AND QUANTUM-PHYSICS-BASED INFORMATION SECURITY, SPIE, 1000 20TH ST. BELLINGHAM WA 98225-6705 USA, vol. 8189, no. 1, 6 October 2011 (2011-10-06), pages 1-10, DOI: 10.1117/12.898109 discusses spatially offset Raman spectroscopy (SORS) for liquid screening.

CN203929643U proposed a security inspection apparatus for liquid. It may use Raman spectrum technology or electronic scale weighing device and barcode scanner to inspect the liquid.

WO2014060983A1 proposed an arrangement for an analysis system having a birefringent component which is provided for use in spatial offset measurements and analysis systems.

US6456067B1 proposed a product sensor system for use in a refreshment center configured to sense a number of metal product containers.

US2002067163A1 proposed an apparatus and method used to detect metalized containers or other objects in closed packages traveling in a conveyor stream.

### SUMMARY OF THE INVENTION

In view of the above problems in the prior art, the present disclosure provides a liquid object identification apparatus, as defined in appended claim 1, and a liquid object identification method, as defined in appended claim 12, that are adapted for various kinds of packages, such as, transparent package, semi-transparent package.

The present invention provides a liquid object identification apparatus comprising:
a laser configured to emit an exciting light;
an optical module configured to guide the exciting light to the liquid object to be inspected and collect a Raman scattered light from the liquid object to be inspected; and
a spectrometer configured to receive the collected Raman scattered light and to form a Raman spectrum of the liquid object to be inspected,
wherein the optical module has a first illumination optical path for guiding the exciting light to the liquid object to be inspected, a second illumination optical path for guiding the exciting light to the liquid object to be inspected and a collecting optical path for collecting the Raman scattered light from the liquid object to be inspected, and wherein the first illumination optical path and the collecting optical path at least partly share a common optical axis, and the second illumination optical path has an optical axis deviated from the optical axis of the collecting optical path, and wherein the optical module further comprises an optical path switching device configured to switch the exciting light emitted from the laser to the first illumination optical path or the second illumination optical path depending on a package of the liquid object to be inspected,
wherein the liquid object identification apparatus further includes a data process device which comprises:
   a storing unit in which a reference Raman spectrum library is stored; and
   a comparing unit configured to compare the Raman spectrum of the liquid object to be inspected with reference Raman spectra in the reference Raman spectrum library to identify the liquid object,
wherein the reference Raman spectrum library comprises a first reference Raman spectrum library which is established on the basis of reference liquid in a transparent package and a second reference Raman spectrum library which is established on the basis of reference liquid in a semi-transparent or opaque package, the data process device further comprising:
   a spectrum library selecting unit configured to select the first reference Raman spectrum library in case that the package of the liquid object to be inspected is transparent and to select the second reference Raman spectrum library in case that the package of the liquid object to be inspected is semi-transparent or opaque.

In an exemplary embodiment, the optical path switching device is configured to switch the exciting light emitted from the laser to the first illumination optical path in case that the package of the liquid object to be inspected is transparent and to switch the exciting light emitted from the laser to the second illumination optical path in case that the package of the liquid object to be inspected is semi-transparent or opaque.

In an exemplary embodiment, the first illumination optical path passes through the package of the liquid object to be inspected at a position different from the position at which the second illumination optical path passes through the package of the liquid object to be inspected.

In an exemplary embodiment, the optical module further comprises a first lens which is shared by both the first illumination optical path and the collecting optical path and is configured to focus the exciting light via the first illumination optical path onto the liquid object to be inspected and collect the Raman scattered light from the liquid object to be inspected.

In an exemplary embodiment, the optical module further comprises a second lens which is located in the second illumination optical path and configured to focus the exciting light via the second illumination optical path onto the liquid object to be inspected.

In an exemplary embodiment, the second lens has a primary optical axis which does not coincide with that of the first lens.

In an exemplary embodiment, the optical path switching device is a deflectable reflector or prism.

In an exemplary embodiment, the liquid object identification apparatus further includes a control device configured to control the switching operation of the optical path switching device depending on the package of the liquid object.

In an exemplary embodiment, the liquid object identification apparatus further includes a liquid density detecting device which comprises:
a weight detector configured to weigh the liquid object to be inspected; and
a density calculator configured to calculate density of the liquid object to be inspected depending on the weight and the reference volume of the liquid object to be inspected.

In an exemplary embodiment, the liquid object identification apparatus further includes a data process device which comprises:
a storing unit in which a liquid density data library is stored; and
a density recognition unit configured to compare the density of the liquid object to be inspected with the liquid density data library so as to identify the liquid object.

In an exemplary embodiment, the liquid density detecting device further includes a metal inductor configured to determine whether the package of the liquid object to be inspected is a metal package or not, the liquid density detecting device being configured to switch on the weight detector and the density calculator in case that the package of the liquid object to be inspected is determined as the metal package.

The present invention also provides a liquid object identification method comprising:
determining whether a package of the liquid object to be inspected is transparent or not;
performing a first Raman spectrum inspection step if the package of the liquid object to be inspected is transparent, otherwise, detecting whether the package of the liquid object to be inspected is a metal package, and performing a density detection step if it is the metal package or performing a second Raman spectrum inspection step if it is not the metal package,
wherein the first Raman spectrum inspection step comprises:
   switching the exciting light emitted from the laser to a first illumination optical path in an optical module and guiding the exciting light to the liquid object to be inspected via the first illumination optical path and collecting the Raman scattered light from the liquid object to be inspected by a collecting optical path to generate a Raman spectrum of the liquid object to be inspected, and
   comparing the generated Raman spectrum of the liquid object to be inspected with reference Raman spectra in a first reference Raman spectrum library to identify the liquid object to be inspected; and
wherein the second Raman spectrum inspection step comprises:
   switching the exciting light emitted from the laser to a second illumination optical path in an optical module and guiding the exciting light to the liquid object to be inspected via the second illumination optical path and collecting the Raman scattered light from the liquid object to be inspected by the collecting optical path to generate a Raman spectrum of the liquid object to be inspected, and
   comparing the generated Raman spectrum of the liquid object to be inspected with reference Raman spectra in a second reference Raman spectrum library to identify the liquid object to be inspected, and
wherein the first illumination optical path and the collecting optical path at least partly share a common optical axis, and the second illumination optical path has an optical axis deviated from the optical axis of the collecting optical path,
wherein the first reference Raman spectrum library is established on the basis of reference liquid in a transparent package and the second reference Raman spectrum library is established on the basis of reference liquid in a semi-transparent or opaque package.

In an exemplary embodiment, the first reference Raman spectrum library is the same with the second reference Raman spectrum library or is different from the second reference Raman spectrum library.

The liquid object identification method and apparatus provided by the embodiments of the present invention can adjust an optical detection arrangement on the basis of different kinds of packages for the liquid object, such that the applicability of the identification method and apparatus to various packages for the liquid object can be improved and the comprehensive performance of the identification method and apparatus can be enhanced.

### BRIEF DESCRIPTION OF THE DRAWINGS

The present disclosure will become clearer after the description for embodiments with reference to the following figures have been read:
Fig.1 and Fig. 2 are schematic views showing a structure of a liquid object identification apparatus according to an embodiment of the present invention;
Fig.3 is a schematic view showing an example of a data process device in the liquid object identification apparatus according to an embodiment of the present invention;
Fig.4 is a schematic view showing a liquid density detecting device in the liquid object identification apparatus according to an embodiment of the present invention; and
Fig.5 is a flow chart of a liquid object identification method according to an embodiment of the present invention.

### DETAILED DESCRIPTION OF PREFERRED EMBODIMENTS

The embodiments of the present invention will be further explained below with reference to the figures and examples. Throughout the description, the same or similar reference numbers indicate the same or similar members. The following embodiments along with the figures are only used to explain the general concept of the present invention, instead of being intended to limit the scope of the present invention, which is defined by the appended claims.

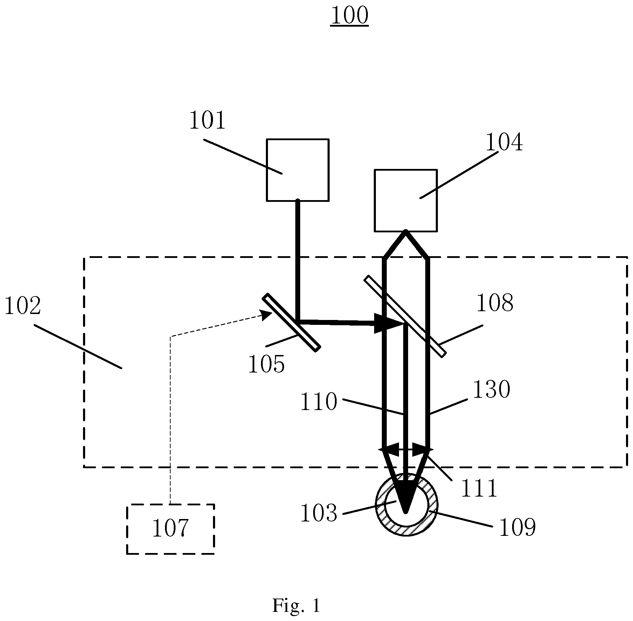

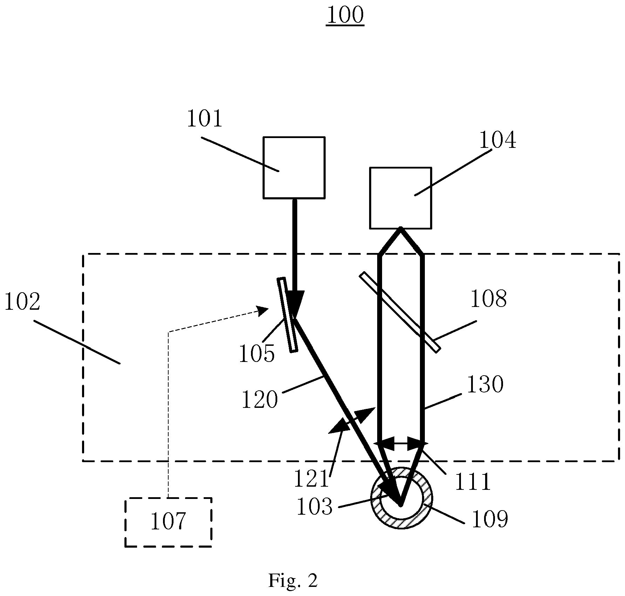

An embodiment of the present invention provides a liquid object identification apparatus. The liquid object identification apparatus 100 includes: a laser 101 configured to emit an exciting light; an optical module 102 configured to guide the exciting light to the liquid object 103 to be inspected and collect a Raman scattered light from the liquid object to be inspected; and a spectrometer 104 configured to receive the collected Raman scattered light and to form a Raman spectrum of the liquid object 103 to be inspected. In an example, the optical module 102 has a first illumination optical path 110 for guiding the exciting light to the liquid object 103 to be inspected, a second illumination optical path 120 for guiding the exciting light to the liquid object 103 to be inspected and a collecting optical path 130 for collecting the Raman scattered light from the liquid object 103 to be inspected. The first illumination optical path110 and the collecting optical path 130 at least partly share a common optical axis(as shown in Fig. 1, the collecting optical path 130 and a part of the first illumination optical path110 share a common optical axis), and the second illumination optical path 120 has an optical axis deviated from the optical axis of the collecting optical path 130(as shown in Fig. 2). As an example, the optical axis of the second illumination optical path 120 is deviated from the optical axis of the collecting optical path 130 by an angle of 20 degrees to 70 degrees. The optical module 102 further includes an optical path switching device 105, which is configured to switch the exciting light emitted from the laser 101 to the first illumination optical path 110 or the second illumination optical path 120 depending on a package 109 of the liquid object 103 to be inspected.

Figs. 1 and 2 schematically show two exemplified work states of the optical module 102 respectively. In Fig. 1, the exciting light is radiated onto the liquid object 103 along the first illumination optical path 110 and the Raman scattered light from the liquid object 103 is collected via the collecting optical path 130. Such arrangement is adapted to inspect the liquid object 103 to be inspected contained in a transparent package. The transparent package has a relatively weak interference to the inspection of the liquid object 103 and the collecting optical path 130 and a part of the first illumination optical path 110 share a common optical axis, thus, the focus point for the collected light and the focus point for the exciting light coincide with each other such that the Raman scattered light signals can be collected as large as possible to achieve a large signal-to-noise ratio as possible. In Fig. 2, the exciting light is radiated onto the liquid object 103 along the second illumination optical path 120 and the Raman scattered light from the liquid object 103 is collected via the collecting optical path 130. Such arrangement is adapted to inspect the liquid object 103 contained in a semi-transparent or opaque package. The semi-transparent or opaque package has a relatively strong interference to the inspection of the liquid object 103 and thus, the Raman light signals or florescent light signals produced by the semi-transparent or opaque package itself need to be avoided as possible. In the case shown in Fig. 2, the position where the exciting light is radiated on the package of the liquid object is deviated from the signal collecting position of the collecting optical path, thus, the effects of the Raman light signals or florescent light signals produced by the semi-transparent or opaque package itself can be suppressed or reduced.

It should be noted that the term "transparent", "semi-transparent" or "opaque" package is proposed on the basis of the visible light in the present application. In practice, it may be judged by human's eyes.

In an example, the optical path switching device 105 may be configured to switch the exciting light emitted from the laser 101 to the first illumination optical path 110 in case that the package 109 of the liquid object 103 to be inspected is transparent and to switch the exciting light emitted from the laser 101 to the second illumination optical path 120 in case that the package of the liquid object 103 to be inspected is semi-transparent or opaque. It may optimize the inspection of the liquid object 103 in package, such that the liquid object 103 in any of various kinds of packages can be correctly identified.

In an example, the first illumination optical path 110 may pass through the package of the liquid object 103 to be inspected at a position different from the position at which the second illumination optical path 120 passes through the package of the liquid object 103 to be inspected. It may improve the separation between the second illumination optical path 120 and the collecting optical path 130, since the first illumination optical path 110 and the collecting optical path 130 at least partly share the common optical axis. As the position at which the second illumination optical path 120 passes through the package 109 is different from the position at which the first illumination optical path 110 passes through the package 109, it is different from the position at which the light collecting optical path 130 passes through the package 109. In this way, at least most of the Raman light signals or florescent light signals which are produced by the package itself when the exciting light passes through the package along the second illumination optical path 120, will not be collected by the collecting optical path 130.

In an example, the optical module 102 may further include a first lens 111 which is shared by both the first illumination optical path 110 and the collecting optical path 130. The first lens 111 may be configured to focus the exciting light via the first illumination optical path 110 onto the liquid object 103 to be inspected and collect the Raman scattered light from the liquid object 103 to be inspected. That is, the first lens 111 is used as both a focus lens in the first illumination optical path 110 and a collective lens in the collecting optical path 130. It may ensure that the converging position for the exciting light coincides with the position of the focus point of the collecting light when the exciting light is guided along the first illumination optical path 110 such that the signal-to-noise ratio of the Raman scattered light signals can be improved.

As an example, the optical module 102 may further include a second lens 121 which is located in the second illumination optical path 120 and configured to focus the exciting light via the second illumination optical path 120 onto the liquid object 103 to be inspected. In this way, the second illumination optical path 120 does not use the focus lens in the first illumination optical path 110 (i.e., the collective lens in the collecting optical path 130) as the focus lens, but uses another focus lens. It ensures the second illumination optical path 120 to be separated from the collecting optical path 130. In order to further ensure the light focus position of the second illumination optical path 120 to be separated from the light collective position of the collecting optical path 130, for example, the primary optical axis of the second lens 121 may be arranged to not coincide with that of the first lens 111. As an example, the optical module 102 may further include other optical elements, for example a dichroic mirror 108 for reflecting and filtering the optical signals. However, the second lens 121 is not necessary.

In an example, the optical path switching device 105 may be a deflectable reflector, as shown in Figs. 1-2. In that case, the direction in which the exciting light is guided may change by deflecting the mirror so as to switch the exciting light between the first illumination optical path 110 and the second illumination optical path 120. However, the embodiments of the optical path switching device 105 are not limited to this. Any components that can change the direction of the optical path in the prior art may be used as the optical path switching device 105, such as, a prism, an acoustooptic modulator, an electro-optical modulator and the like.

As an example, as indicated by the dash boxes in Figs. 1-2, the liquid object identification apparatus 100 may further include a control device 107 configured to control the switching operation of the optical path switching device 105 depending on the package of the liquid object (for example a transparent package). The dash arrows in Figs. 1-2 indicate the operational relation between the control device 107 and the optical path switching device 105. Whether the package of the liquid object is transparent or not may be determined manually (for example by observing the appearance of the package or achieving the marker of the package). The control device 107 may be an automatic control device or a manual control device.

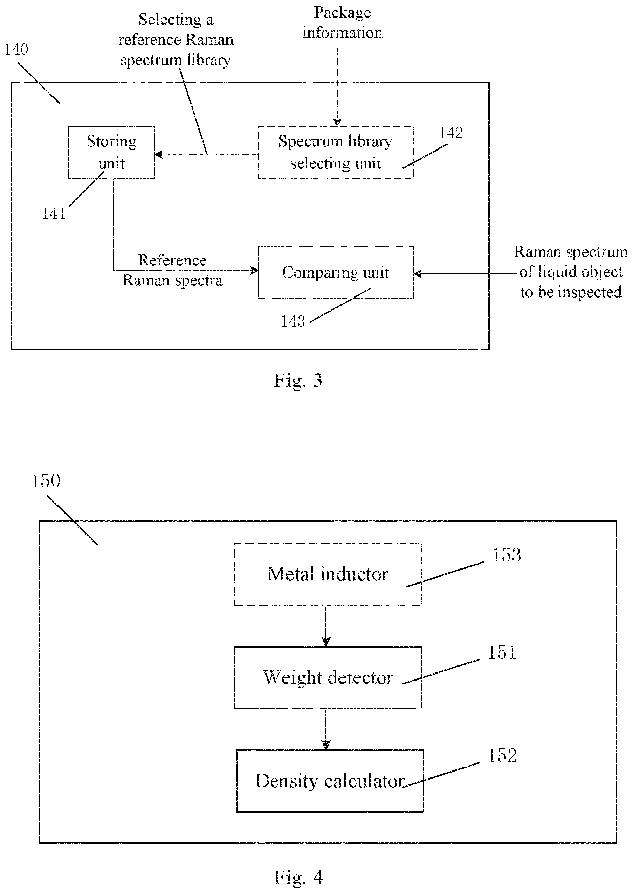

The liquid object identification apparatus 100 further includes a data process device 140, as illustrated in Fig. 3. The data process device 140 includes: a storing unit 141 in which a first reference Raman spectrum library and a second reference Raman spectrum library are stored; a spectrum library selecting unit 142 configured to select the first reference Raman spectrum library in case that the package 109 of the liquid object 103 to be inspected is transparent and to select the second reference Raman spectrum library in case that the package 109 of the liquid object 103 to be inspected is semi-transparent or opaque; and a comparing unit 143 configured to compare the Raman spectrum of the liquid object 103 to be inspected with reference Raman spectra in the selected first or second reference Raman spectrum library to identify the liquid object. The Raman spectrum of the liquid object 103 may be generated by the spectrometer 104. As illustrated in Fig. 3, in practical operation, as an example, information on the package of the liquid object to be inspected is inputted into the spectrum library selecting unit 142. The spectrum library selecting unit 142 selects the first or second reference Raman spectrum library on the basis of the information and sends the selection results to the storing unit 141. The desired reference Raman spectra are extracted from the storing unit 141 into the comparing unit 143 and the Raman spectrum of the liquid object 103 is also inputted into the comparing unit 143 so as to achieve the comparing operation of the Raman spectrum in the comparing unit 143.

The first reference Raman spectrum library is different from the second reference Raman spectrum library or, in an example which does not fall within the scope of the claims, may be the same with the second reference Raman spectrum library. In the latter case, it is not necessary to select the reference Raman spectrum library, and thus the spectrum library selecting unit 142 (indicated by dash line in Fig. 3) may not be provided in the data process device 140, instead, the reference Raman spectra in the reference Raman spectrum library is directly extracted from the storing unit 141 into the comparing unit 143 to achieve the comparing operation of the Raman spectrum.

As an example, the first reference Raman spectrum library may be established on the basis of reference liquid in a transparent package and the second reference Raman spectrum library may be established on the basis of reference liquid in a semi-transparent or opaque package.

In an example, the first reference Raman spectrum library and the second reference Raman spectrum library are provided for the case that the liquid contained in the transparent package is inspected via the first illumination optical path 110 and the case that the liquid contained in the semi-transparent or opaque package is inspected via the second illumination optical path 120 respectively. For example, before the liquid object 103 is inspected, the first reference Raman spectrum library and the second reference Raman spectrum library may be established as the follow processes:
supplying reference liquid into a transparent package and switching the exciting light emitted from the laser 101 to the first illumination optical path 110 in the optical module 102 and measuring the Raman spectrum of the reference liquid to establish the first reference Raman spectrum library; and
supplying reference liquid into a semi-transparent or opaque package and switching the exciting light emitted from the laser 101 to the second illumination optical path 120 in the optical module 102 and measuring the Raman spectrum of the reference liquid to establish the second reference Raman spectrum library.

It should be understood that the Raman spectrum of the reference liquid will not be added into the reference Raman spectrum library unless the reference liquid has Raman characteristic information and the measured spectrum embodies all or part of Raman characteristic information.

In an example, the liquid object identification apparatus 100 may further include a liquid density detecting device 150. As illustrated in Fig. 4, the liquid density detecting device 150 includes: a weight detector 151 configure to weigh the liquid object 103 to be inspected; and a density calculator 152 configured to calculate density of the liquid object 103 to be inspected depending on the weight and the reference volume of the liquid object 103 to be inspected. The reference volume may be a nominal volume of the liquid object 103 to be inspected, may also be a volume determined by the operator as required. Since the liquid density is also one of properties of the liquid, the identification of the liquid object may also be achieved by measuring the density of the liquid object 103. In an example, the liquid object may be identified by comparing the calculated density of the liquid object 103 with reference density values in a standard density table. Or, before the liquid object is identified by the liquid density detecting device 150, a reference density table or data library may be established by measuring the weight and volume of the reference liquid and calculating the corresponding reference density, as the basis of density comparison and liquid identification. The reference density table or reference density data library may be stored in the storing unit 141.

As an example, the liquid object identification apparatus may further include a data process device for density measurement. The data process device may include: a storing unit in which a liquid density data library is stored; and a density recognition unit configured to compare the density of the liquid object to be inspected with the liquid density data library to identify the liquid object. The storing unit may be the same with the storing unit for storing the reference Raman spectrum library shown in Fig. 3, or may be another storing unit other than the storing unit for storing the reference Raman spectrum library.

The Raman spectrum inspection process or method has a limitation on inspection of the liquid object in a metal package, because the exciting light for Raman inspection cannot often penetrate the metal. Thus, the liquid object in the metal package may be identified by means of the density detecting device 150. Certainly, the function of the density detecting device 150 is not limited to this, for example, the density detecting device 150 may also be used to inspect the liquid object in non-metal package or in a certain package which is not transparent to the exciting light.

In an example, the liquid density detecting device 150 may further include a metal inductor 153. The metal inductor 153 may be configured to determine whether the package of the liquid object 103 to be inspected is a metal package or not. The liquid density detecting device 150 may be configured to switch on the weight detector 151 and the density calculator 152 in case that the package of the liquid object 103 to be inspected is determined as the metal package. As an example, the metal inductor 153 may be arranged in vicinity of the position where the liquid object 103 is arranged. It may be initially determined by the metal inductor 153 whether the package of the liquid object 103 to be inspected is a metal package or not, before the exciting light is emitted. If it is the metal package, the liquid density detecting device 150 will be directly switched on. It may improve the work efficiency of the liquid object identification apparatus 100.

The present invention also provides a liquid object identification method. The method may include: determining whether a package of the liquid object to be inspected is transparent or not; performing a first Raman spectrum inspection step if the package of the liquid object to be inspected is transparent, otherwise, detecting whether the package of the liquid object to be inspected is a metal package, and performing a density detection step if it is the metal package or performing a second Raman spectrum inspection step if it is not the metal package. The first Raman spectrum inspection step includes: switching the exciting light emitted from the laser 101 to a first illumination optical path 110 in an optical module 102 and guiding the exciting light to the liquid object 103 to be inspected via the first illumination optical path 110 and collecting the Raman scattered light from the liquid object 103 to be inspected by a collecting optical path 130 to generate a Raman spectrum of the liquid object 103 to be inspected, and comparing the generated Raman spectrum of the liquid object 103 to be inspected with reference Raman spectra in a first reference Raman spectrum library to identify the liquid object. The second Raman spectrum inspection step includes: switching the exciting light emitted from the laser 101 to a second illumination optical path 120 in an optical module 102 and guiding the exciting light to the liquid object 103 to be inspected via the second illumination optical path 120 and collecting the Raman scattered light from the liquid object 103 to be inspected by the collecting optical path 130 to generate a Raman spectrum of the liquid object 103 to be inspected, and comparing the generated Raman spectrum of the liquid object 103 to be inspected with reference Raman spectra in a second reference Raman spectrum library to identify the liquid object 103. In the embodiment, the first illumination optical path 110 and the collecting optical path 130 at least partly share a common optical axis, and the second illumination optical path 120 has an optical axis deviated from the optical axis of the collecting optical path 130. The first reference Raman spectrum library is established on the basis of reference liquid in a transparent package and the second reference Raman spectrum library is established on the basis of reference liquid in a semi-transparent or opaque package.

The above liquid object identification method provides a selective inspection of the liquid object 103 in various kinds of packages so as to improve the applicability of the method to the package of the liquid object and improve the accuracy of the detecting results.

The first reference Raman spectrum library may be different from the second reference Raman spectrum library. Two reference Raman spectrum libraries are used for the above cases (i.e., the case of transparent package and the case of semi-transparent or opaque package) respectively such that the comparison efficiency and accuracy of the Raman spectrum can be improved.

In an example, before determining whether the package of the liquid to be inspected is a transparent package or not, the liquid object identification method may further includes: supplying reference liquid into a transparent package and switching the exciting light emitted from the laser 101 to the first illumination optical path 110 in the optical module 102 and measuring the Raman spectrum of the reference liquid to establish the first reference Raman spectrum library; and supplying reference liquid into a semi-transparent or opaque package and switching the exciting light emitted from the laser 101 to the second illumination optical path 120 in the optical module 102 and measuring the Raman spectrum of the reference liquid to establish the second reference Raman spectrum library. It should be understood that, in practice, the Raman spectrum of the reference liquid will not be added into the reference Raman spectrum library unless the reference liquid has Raman characteristic information and the measured spectrum embodies all or part of Raman characteristic information. The first reference Raman spectrum library and the second reference Raman spectrum library may for example be stored in the storing unit 141.

As an example, before determining whether the package of the liquid to be inspected is a transparent package or not, the liquid object identification method may further includes: establishing a liquid density data library. As an example, the above density detection step may include: determining whether the package of the liquid object to be inspected is a metal package or not; weighting the liquid object and calculating the density of the liquid object by the weight and reference volume of the liquid object if the package of the liquid object to be inspected is a metal package; and identifying the liquid object by judging directly on the basis of the density of the liquid object or by comparing the density of the liquid object with the liquid density data library. The density detection process may not only be used advantageously in combination with the Raman spectrum inspection process, but also be used separately to identify the liquid object. As an example, before identifying the liquid object using the density detection process, the reference density table may be established by measuring the weight and volume of the reference liquid and calculating the corresponding reference density for comparison with the density of the liquid object to be inspected. Certainly, a commercially available substance standard density table may also be used as the basis of identification of the liquid object.

Although the density detection process may be used to identify the liquid object in any of kinds of packages, the Raman spectrum inspection process is typically selected for non-metal package at first to achieve more accurate inspection.

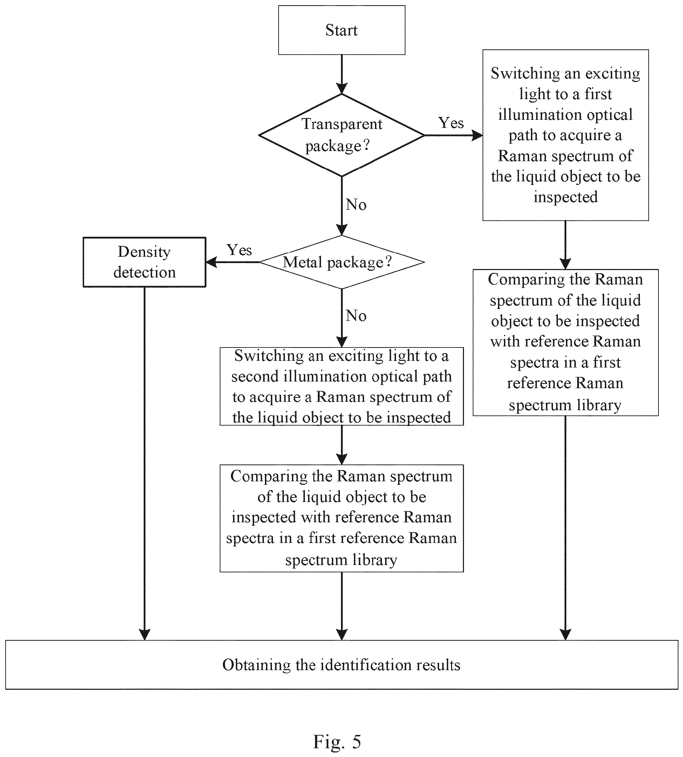

Fig. 5 shows the liquid object identification method according to an embodiment of the present invention. The identification results may be obtained by using any one of the first Raman spectrum inspection step, the second Raman spectrum inspection step and the density detection step. It improves significantly applicability, flexibility and accuracy of the liquid object identification.

The liquid object identification method and apparatus according to the embodiments of the present invention may be used in various applications such as object security inspection, true-false identification.

Although the present disclosure is explained with reference to figures, all of the embodiments shown in figures are intended to explain the preferred embodiments of the present invention by ways of examples, instead of being intended to limit the present invention. The scope of the invention is defined by the appended claims.

## Claims

1. A liquid object identification apparatus (100) comprising:
a laser (101) configured to emit an exciting light;
an optical module (102) configured to guide the exciting light to the liquid object (103) to be inspected and collect a Raman scattered light from the liquid object (103) to be inspected; and
a spectrometer (104) configured to receive the collected Raman scattered light and to form a Raman spectrum of the liquid object (103) to be inspected,
wherein the optical module (102) has a first illumination optical path (110) for guiding the exciting light to the liquid object (103) to be inspected, a second illumination optical path (120) for guiding the exciting light to the liquid object (103) to be inspected and a collecting optical path (130) for collecting the Raman scattered light from the liquid object (103) to be inspected, and wherein the first illumination optical path (110) and the collecting optical path (130) at least partly share a common optical axis, and the second illumination optical path (120) has an optical axis deviated from the optical axis of the collecting optical path (130), and wherein the optical module (102) further comprises an optical path switching device (105) configured to switch the exciting light emitted from the laser (101) to the first illumination optical path (110) or the second illumination optical path (120) depending on a package (109) of the liquid object (103) to be inspected, wherein
the liquid object identification apparatus (100) further comprises a data process device (140) which comprises:
a storing unit (141) in which a reference Raman spectrum library is stored; and
a comparing unit (143) configured to compare the Raman spectrum of the liquid object (103) to be inspected with reference Raman spectra in the reference Raman spectrum library to identify the liquid object,
**characterized in that**
the reference Raman spectrum library comprises a first reference Raman spectrum library which is established on the basis of reference liquid in a transparent package and a second reference Raman spectrum library which is established on the basis of reference liquid in a semi-transparent or opaque package, and **in that** the data process device (140) further comprises:
a spectrum library selecting unit (142) configured to select the first reference Raman spectrum library in case that the package (109) of the liquid object (103) to be inspected is transparent and to select the second reference Raman spectrum library in case that the package (109) of the liquid object (103) to be inspected is semi-transparent or opaque.

2. The liquid object identification apparatus (100) according to claim 1, wherein the optical path switching device (105) is configured to switch the exciting light emitted from the laser (101) to the first illumination optical path (110) in case that the package (109) of the liquid object (103) to be inspected is transparent and to switch the exciting light emitted from the laser (101) to the second illumination optical path (120) in case that the package (109) of the liquid object (103) to be inspected is semi-transparent or opaque.

3. The liquid object identification apparatus (100) according to claim 1, wherein the first illumination optical path (110) is arranged to pass through the package (109) of the liquid object (103) to be inspected at a position different from the position at which the second illumination optical path (120) is arranged to pass through the package (109) of the liquid object (103) to be inspected.

4. The liquid object identification apparatus (100) according to claim 1, wherein the optical module (102) further comprises a first lens (111) which is shared by both the first illumination optical path (110) and the collecting optical path (130) and is configured to focus the exciting light via the first illumination optical path (110) onto the liquid object (103) to be inspected and collect the Raman scattered light from the liquid object (103) to be inspected.

5. The liquid object identification apparatus (100) according to claim 4, wherein the optical module (102) further comprises a second lens (121) which is located in the second illumination optical path (120) and configured to focus the exciting light via the second illumination optical path (120) onto the liquid object (103) to be inspected.

6. The liquid object identification apparatus (100) according to claim 5, wherein the second lens (121) has a primary optical axis which does not coincide with that of the first lens (111).

7. The liquid object identification apparatus (100) according to any one of claims 1-6, wherein the optical path switching device (105) is a deflectable reflector or prism.

8. The liquid object identification apparatus (100) according to any one of claims 1-6, further comprising a control device (107) configured to control the switching operation of the optical path switching device (105) depending on the package (109) of the liquid object.

9. The liquid object identification apparatus (100) according to any one of claims 1-6, further comprising a liquid density detecting device (150) which comprises:
a weight detector (151) configured to weigh the liquid object (103) to be inspected; and
a density calculator (152) configured to calculate density of the liquid object (103) to be inspected depending on the weight and the reference volume of the liquid object (103) to be inspected.

10. The liquid object identification apparatus (100) according to claim 9, further comprising a data process device which comprises:
a storing unit in which a liquid density data library is stored; and
a density recognition unit configured to compare the density of the liquid object to be inspected with the liquid density data library so as to identify the liquid object.

11. The liquid object identification apparatus (100) according to claim 9, wherein the liquid density detecting device (150) further comprises a metal inductor (153) configured to determine whether the package of the liquid object to be inspected is a metal package or not, the liquid density detecting device (150) being configured to switch on the weight detector (151) and the density calculator (152) in case that the package (109) of the liquid object (103) to be inspected is determined as the metal package.

12. A liquid object identification method comprising:
determining whether a package of the liquid object to be inspected is transparent or not;
performing a first Raman spectrum inspection step if the package of the liquid object to be inspected is transparent, otherwise, detecting whether the package of the liquid object to be inspected is a metal package, and performing a density detection step if it is the metal package or performing a second Raman spectrum inspection step if it is not the metal package,
wherein the first Raman spectrum inspection step comprises:
switching the exciting light emitted from the laser to a first illumination optical path in an optical module and guiding the exciting light to the liquid object to be inspected via the first illumination optical path and collecting the Raman scattered light from the liquid object to be inspected by a collecting optical path to generate a Raman spectrum of the liquid object to be inspected, and
comparing the generated Raman spectrum of the liquid object to be inspected with reference Raman spectra in a first reference Raman spectrum library to identify the liquid object to be inspected; and
wherein the second Raman spectrum inspection step comprises:
switching the exciting light emitted from the laser to a second illumination optical path in an optical module and guiding the exciting light to the liquid object to be inspected via the second illumination optical path and collecting the Raman scattered light from the liquid object to be inspected by the collecting optical path to generate a Raman spectrum of the liquid object to be inspected, and
comparing the generated Raman spectrum of the liquid object to be inspected with reference Raman spectra in a second reference Raman spectrum library to identify the liquid object to be inspected, and
wherein the first illumination optical path and the collecting optical path at least partly share a common optical axis, and the second illumination optical path has an optical axis deviated from the optical axis of the collecting optical path, wherein
the first reference Raman spectrum library is established on the basis of reference liquid in a transparent package and the second reference Raman spectrum library is established on the basis of reference liquid in a semi-transparent or opaque package.

13. The liquid object identification method according to claim 12, wherein the first reference Raman spectrum library is different from the second reference Raman spectrum library.

## Patentansprüche

1. Flüssigobjekt-Identifizierungsvorrichtung (100), die Folgendes aufweist:
einen Laser (101), der zum Emittieren eines Anregungslichts konfiguriert ist;
ein optisches Modul (102), das zum Leiten des Anregungslichts zu dem zu untersuchenden flüssigen Objekt (103) und zum Sammeln eines Raman-Streulichts von dem zu untersuchenden flüssigen Objekt (103) konfiguriert ist; und
ein Spektrometer (104), das zum Empfangen des gesammelten Raman-Streulichts und zum Bilden eines Ramanspektrums des zu untersuchenden flüssigen Objekts (103) konfiguriert ist,
wobei das optische Modul (102) einen ersten Belichtungsstrahlengang (110) zum Leiten des Anregungslichts zu dem zu untersuchenden flüssigen Objekt (103), einen zweiten Belichtungsstrahlengang (120) zum Leiten des Anregungslichts zu dem zu untersuchenden flüssigen Objekt (103) und einen Sammelstrahlengang (130) zum Sammeln des Raman-Streulichts von dem zu untersuchenden flüssigen Objekt (103) hat und wobei der erste Belichtungsstrahlengang (110) und der Sammelstrahlengang (130) sich eine gemeinsame optische Achse wenigstens teilweise teilen und der zweite Belichtungsstrahlengang (120) eine optische Achse hat, die von der optischen Achse des Sammelstrahlengangs (130) abgelenkt ist, und wobei das optische Modul (102) ferner eine Strahlengangumschaltvorrichtung (105) aufweist, die zum Umschalten des vom Laser (101) emittierten Anregungslichts zum ersten Belichtungsstrahlengang (110) oder zum zweiten Belichtungsstrahlengang (120) in Abhängigkeit von einer Packung (109) des zu untersuchenden flüssigen Objekts (103) konfiguriert ist, wobei
die Flüssigobjekt-Identifizierungsvorrichtung (100) ferner eine Datenverarbeitungsvorrichtung (140) aufweist, die Folgendes aufweist:
eine Speichereinheit (141), in der eine Referenz-Ramanspektrenbibliothek gespeichert wird; und
eine Vergleichseinheit (143), die zum Vergleichen des Ramanspektrums des zu untersuchenden flüssigen Objekts (103) mit Referenz-Ramanspektren in der Referenz-Ramanspektrenbibliothek zum Identifizieren des flüssigen Objekts konfiguriert ist,
**dadurch gekennzeichnet, dass**
die Referenz-Ramanspektrenbibliothek eine erste Referenz-Ramanspektrenbibliothek, die auf Basis von Referenzflüssigkeit in einer transparenten Packung erstellt ist, und eine zweite Referenz-Ramanspektrenbibliothek, die auf Basis von Referenzflüssigkeit in einer halbtransparenten oder opaken Packung erstellt ist, aufweist, und dadurch, dass
die Datenprozessvorrichtung (140) ferner Folgendes aufweist:
eine Spektrenbibliothek-Auswähleinheit (142), die zum Auswählen der ersten Referenz-Ramanspektrenbibliothek im Fall, dass die Packung (109) des zu untersuchenden flüssigen Objekts (103) transparent ist, und zum Auswählen der zweiten Referenz-Ramanspektrenbibliothek im Fall, dass die Packung (109) des zu untersuchenden flüssigen Objekts (103) halbtransparent oder opak ist, konfiguriert ist.

2. Flüssigobjekt-Identifizierungsvorrichtung (100) nach Anspruch 1, wobei die Strahlengangumschaltvorrichtung (105) zum Umschalten des von dem Laser (101) emittierten Anregungslichts zum ersten Belichtungsstrahlengang (110) im Fall, dass die Packung (109) des zu untersuchenden flüssigen Objekts (103) transparent ist, und zum Umschalten des vom Laser (101) emittierten Anregungslichts zum zweiten Belichtungsstrahlengang (120) im Fall, dass die Packung (109) des zu untersuchenden flüssigen Objekts (103) halbtransparent oder opak ist, konfiguriert ist.

3. Flüssigobjekt-Identifizierungsvorrichtung (100) nach Anspruch 1, wobei der erste Belichtungsstrahlengang (110) angeordnet ist, um an einer Position durch die Packung (109) des zu untersuchenden flüssigen Objekts (103) zu verlaufen, die von der Position verschieden ist, an der der zweite Belichtungsstrahlengang (120) zum Verlaufen durch die Packung (109) des zu untersuchenden flüssigen Objekts (103) angeordnet ist.

4. Flüssigobjekt-Identifizierungsvorrichtung (100) nach Anspruch 1, wobei das optische Modul (102) ferner eine erste Linse (111) aufweist, die sich der erste Belichtungsstrahlengang (110) und der Sammelstrahlengang (130) teilen und die zum Fokussieren des Anregungslichts durch den ersten Belichtungsstrahlengang (110) auf das zu untersuchende flüssige Objekt (103) und zum Sammeln des Raman-Streulichts von dem zu untersuchenden flüssigen Objekt (103) konfiguriert ist.

5. Flüssigobjekt-Identifizierungsvorrichtung (100) nach Anspruch 4, wobei das optische Modul (102) ferner eine zweite Linse (121) aufweist, die im zweiten Belichtungsstrahlengang (120) liegt und zum Fokussieren des Anregungslichts durch den zweiten Belichtungsstrahlengang (120) auf das zu untersuchende flüssige Objekt (103) konfiguriert ist.

6. Flüssigobjekt-Identifizierungsvorrichtung (100) nach Anspruch 5, wobei die zweite Linse (121) eine optische Hauptachse hat, die nicht mit der der ersten Linse (111) koinzident ist.

7. Flüssigobjekt-Identifizierungsvorrichtung (100) nach einem der Ansprüche 1 bis 6, wobei die Strahlengangumschaltvorrichtung (105) ein ablenkbarer Reflektor oder ein Prisma ist.

8. Flüssigobjekt-Identifizierungsvorrichtung (100) nach einem der Ansprüche 1 bis 6, die ferner eine Steuervorrichtung (107) aufweist, die zum Steuern des Umschaltvorgangs der Strahlengangumschaltvorrichtung (105) in Abhängigkeit von der Packung (109) des flüssigen Objekts konfiguriert ist.

9. Flüssigobjekt-Identifizierungsvorrichtung (100) nach einem der Ansprüche 1 bis 6, die ferner eine Flüssigkeitsdichtedetektionsvorrichtung (150) aufweist, die Folgendes aufweist:
einen Gewichtsdetektor (151), der zum Wiegen des zu untersuchenden flüssigen Objekts (103) konfiguriert ist; und
einen Dichterechner (152), der zum Berechnen der Dichte des zu untersuchenden flüssigen Objekts (103) in Abhängigkeit von dem Gewicht und dem Referenzvolumen des zu untersuchenden flüssigen Objekts (103) konfiguriert ist.

10. Flüssigobjekt-Identifizierungsvorrichtung (100) nach Anspruch 9, die ferner eine Datenverarbeitungsvorrichtung aufweist, die Folgendes aufweist:
eine Speichereinheit, in der eine Flüssigkeitsdichtedatenbibliothek gespeichert wird; und
eine Dichteerkennungseinheit, die zum Vergleichen der Dichte des zu untersuchenden flüssigen Objekts mit der Flüssigkeitsdichtedatenbibliothek zur Identifizierung des flüssigen Objekts konfiguriert ist.

11. Flüssigobjekt-Identifizierungsvorrichtung (100) nach Anspruch 9, wobei die Flüssigkeitsdichtedetektionseinheit (150) ferner eine Metallspule (153) aufweist, die konfiguriert ist zum Bestimmen, ob die Packung des zu untersuchenden flüssigen Objekts eine Metallpackung ist oder nicht, wobei die Flüssigkeitsdichtedetektionsvorrichtung (150) zum Einschalten des Gewichtsdetektors (151) und des Dichterechners (152) im Fall, dass die Packung (109) des zu untersuchenden flüssigen Objekts (103) als die Metallpackung bestimmt wird, konfiguriert ist.

12. Flüssigobjekt-Identifizierungsverfahren, das Folgendes aufweist:
Bestimmen, ob eine Packung des zu untersuchenden flüssigen Objekts transparent ist oder nicht;
Durchführen eines ersten Ramanspektrenuntersuchungsschritts, falls die Packung des zu untersuchenden flüssigen Objekts transparent ist, ansonsten Feststellen, ob die Packung des zu untersuchenden flüssigen Objekts eine Metallpackung ist, und Durchführen eines Dichtedetektionsschritts, falls sie die Metallpackung ist, oder Durchführen eines zweiten Ramanspektrenuntersuchungsschritts, falls sie nicht die Metallpackung ist,
wobei der erste Ramanspektrenuntersuchungsschritt Folgendes aufweist:
Umschalten des vom Laser emittierten Anregungslichts zu einem ersten Belichtungsstrahlengang in einem optischen Modul und Leiten des Anregungslichts durch den ersten Belichtungsstrahlengang zu dem zu untersuchenden flüssigen Objekt und Sammeln des Ramanstreulichts durch einen Sammelstrahlengang von dem zu untersuchenden flüssigen Objekt zum Erzeugen eines Ramanspektrums des zu untersuchenden flüssigen Objekts; und
Vergleichen des erzeugten Ramanspektrums des zu untersuchenden flüssigen Objekts mit Referenz-Ramanspektren in einer ersten Referenz-Ramanspektrenbibliothek zum Identifizieren des zu untersuchenden flüssigen Objekts; und
wobei der zweite Ramanspektrenuntersuchungsschritt Folgendes aufweist:
Umschalten des vom Laser emittierten Anregungslichts zu einem zweiten Belichtungsstrahlengang in einem optischen Modul und Leiten des Anregungslichts durch den zweiten Belichtungsstrahlengang zu dem zu untersuchenden flüssigen Objekt und Sammeln des Raman-Streulichts durch den Sammelstrahlengang von dem zu untersuchenden flüssigen Objekt zum Erzeugen eines Ramanspektrums des zu untersuchenden flüssigen Objekts, und
Vergleichen des erzeugten Ramanspektrums des zu untersuchenden flüssigen Objekts mit Referenz-Ramanspektren in einer zweiten Referenz-Ramanspektrenbibliothek zum Identifizieren des zu untersuchenden flüssigen Objekts; und
wobei der erste Belichtungsstrahlengang und der Sammelstrahlengang sich eine gemeinsame optische Achse wenigstens teilweise teilen und der zweite Belichtungsstrahlengang eine optische Achse hat, die von der optischen Achse des Sammelstrahlengangs abgelenkt ist, wobei
die erste Referenz-Ramanspektrenbibliothek auf Basis von Referenzflüssigkeit in einer transparenten Packung erstellt ist und die zweite Referenz-Ramanspektrenbibliothek auf Basis von Referenzflüssigkeit in einer halbtransparenten oder opaken Packung erstellt ist.

13. Flüssigobjekt-Identifizierungsverfahren nach Anspruch 12, wobei die erste Referenz-Ramanspektrenbibliothek von der zweiten Referenz-Ramanspektrenbibliothek verschieden ist.

## Revendications

1. Appareil d'identification d'objet liquide (100) comprenant :
un laser (101) configuré pour émettre une lumière d'excitation ;
un module optique (102) configuré pour guider la lumière d'excitation vers l'objet liquide (103) à inspecter et recueillir la lumière diffusée par Raman provenant de l'objet liquide (103) à inspecter ; et
un spectromètre (104) configuré pour recevoir la lumière diffusée par Raman recueillie et pour former un spectre Raman de l'objet liquide (103) à inspecter,
dans lequel le module optique (102) a un premier trajet optique d'éclairage (110) pour guider la lumière d'excitation vers l'objet liquide (103) à inspecter, un deuxième trajet optique d'éclairage (120) pour guider la lumière d'excitation vers l'objet liquide (103) à inspecter et un trajet optique de collecte (130) pour recueillir la lumière diffusée par Raman provenant de l'objet liquide (103) à inspecter, et dans lequel le premier trajet optique d'éclairage (110) et le trajet optique de collecte (130) partagent au moins partiellement un axe optique commun, et le deuxième trajet optique d'éclairage (120) a un axe optique dévié de l'axe optique du trajet optique de collecte (130), et dans lequel le module optique (102) comprend en outre un dispositif de commutation de trajet optique (105) configuré pour commuter la lumière d'excitation émise par le laser (101) vers le premier trajet optique d'éclairage (110) ou le deuxième trajet optique d'éclairage (120) en fonction d'un conditionnement (109) de l'objet liquide (103) à inspecter, dans lequel
l'appareil d'identification d'objet liquide (100) comprend en outre un dispositif de traitement de données (140) qui comprend :
une unité de stockage (141) dans laquelle une bibliothèque de spectres Raman de référence est stockée ; et
une unité de comparaison (143) configurée pour comparer le spectre Raman de l'objet liquide (103) à inspecter avec des spectres Raman de référence dans la bibliothèque de spectres Raman de référence afin d'identifier l'objet liquide,
**caractérisé en ce que**
la bibliothèque de spectres Raman de référence comprend une première bibliothèque de spectres Raman de référence qui est établie sur la base de liquide de référence dans un conditionnement transparent et une deuxième bibliothèque de spectres Raman de référence qui est établie sur la base de liquide de référence dans un conditionnement semi-transparent ou opaque, et **en ce que**
le dispositif de traitement de données (140) comprend en outre :
une unité de sélection de bibliothèque de spectres (142) configurée pour sélectionner la première bibliothèque de spectres Raman de référence dans le cas où le conditionnement (109) de l'objet liquide (103) à inspecter est transparent et pour sélectionner la deuxième bibliothèque de spectres Raman de référence dans le cas où le conditionnement (109) de l'objet liquide (103) à inspecter est semi-transparent ou opaque.

2. Appareil d'identification d'objet liquide (100) selon la revendication 1, dans lequel le dispositif de commutation de trajet optique (105) est configuré pour commuter la lumière d'excitation émise par le laser (101) vers le premier trajet optique d'éclairage (110) dans le cas où le conditionnement (109) de l'objet liquide (103) à inspecter est transparent et pour commuter la lumière d'excitation émise par le laser (101) vers le deuxième trajet optique d'éclairage (120) dans le cas où le conditionnement (109) de l'objet liquide (103) à inspecter est semi-transparent ou opaque.

3. Appareil d'identification d'objet liquide (100) selon la revendication 1, dans lequel le premier trajet optique d'éclairage (110) est agencé pour passer à travers le conditionnement (109) de l'objet liquide (103) à inspecter au niveau d'une position différente de la position au niveau de laquelle le deuxième trajet optique d'éclairage (120) est agencé pour passer à travers le conditionnement (109) de l'objet liquide (103) à inspecter.

4. Appareil d'identification d'objet liquide (100) selon la revendication 1, dans lequel le module optique (102) comprend en outre une première lentille (111) qui est partagée à la fois par le premier trajet optique d'éclairage (110) et le trajet optique de collecte (130) et est configurée pour focaliser la lumière d'excitation par le biais du premier trajet optique d'éclairage (110) sur l'objet liquide (103) à inspecter et recueillir la lumière diffusée par Raman provenant de l'objet liquide (103) à inspecter.

5. Appareil d'identification d'objet liquide (100) selon la revendication 4, dans lequel le module optique (102) comprend en outre une deuxième lentille (121) qui est située dans le deuxième trajet optique d'éclairage (120) et configurée pour focaliser la lumière d'excitation par le biais du deuxième trajet optique d'éclairage (120) sur l'objet liquide (103) à inspecter.

6. Appareil d'identification d'objet liquide (100) selon la revendication 5, dans lequel la deuxième lentille (121) a un axe optique primaire qui ne coïncide pas avec celui de la première lentille (111).

7. Appareil d'identification d'objet liquide (100) selon l'une quelconque des revendications 1 à 6, dans lequel le dispositif de commutation de trajet optique (105) est un réflecteur ou prisme pouvant être dévié.

8. Appareil d'identification d'objet liquide (100) selon l'une quelconque des revendications 1 à 6, comprenant en outre un dispositif de commande (107) configuré pour commander l'opération de commutation du dispositif de commutation de trajet optique (105) en fonction du conditionnement (109) de l'objet liquide.

9. Appareil d'identification d'objet liquide (100) selon l'une quelconque des revendications 1 à 6, comprenant en outre un dispositif de détection de densité de liquide (150) qui comprend :
un détecteur de poids (151) configuré pour peser l'objet liquide (103) à inspecter ; et
un calculateur de densité (152) configuré pour calculer la densité de l'objet liquide (103) à inspecter en fonction du poids et du volume de référence de l'objet liquide (103) à inspecter.

10. Appareil d'identification d'objet liquide (100) selon la revendication 9, comprenant en outre un dispositif de traitement de données qui comprend :
une unité de stockage dans laquelle une bibliothèque de données de densité de liquide est stockée ; et
une unité de reconnaissance de densité configurée pour comparer la densité de l'objet liquide à inspecter avec la bibliothèque de données de densité de liquide de manière à identifier l'objet liquide.

11. Appareil d'identification d'objet liquide (100) selon la revendication 9, dans lequel le dispositif de détection de densité de liquide (150) comprend en outre un inducteur métallique (153) configuré pour déterminer si le conditionnement de l'objet liquide à inspecter est un conditionnement métallique ou non, le dispositif de détection de densité de liquide (150) étant configuré pour mettre en marche le détecteur de poids (151) et le calculateur de densité (152) dans le cas où le conditionnement (109) de l'objet liquide (103) à inspecter est déterminé comme étant le conditionnement métallique.

12. Procédé d'identification d'objet liquide comprenant :
le fait de déterminer si un conditionnement de l'objet liquide à inspecter est transparent ou non ;
le fait d'effectuer une première étape d'inspection par spectre Raman si le conditionnement de l'objet liquide à inspecter est transparent, sinon, le fait de détecter si le conditionnement de l'objet liquide à inspecter est un conditionnement métallique, et le fait d'effectuer une étape de détection de densité s'il s'agit du conditionnement métallique ou le fait d'effectuer une deuxième étape d'inspection par spectre Raman s'il ne s'agit pas du conditionnement métallique,
dans lequel la première étape d'inspection par spectre Raman comprend :
le fait de commuter la lumière d'excitation émise par le laser vers un premier trajet optique d'éclairage dans un module optique et le fait de guider la lumière d'excitation vers l'objet liquide à inspecter par le biais du premier trajet optique d'éclairage et le fait de recueillir la lumière diffusée par Raman provenant de l'objet liquide à inspecter par un trajet optique de collecte afin de générer un spectre Raman de l'objet liquide à inspecter, et
le fait de comparer le spectre Raman généré de l'objet liquide à inspecter avec des spectres Raman de référence dans une première bibliothèque de spectres Raman de référence afin d'identifier l'objet liquide à inspecter ; et
dans lequel la deuxième étape d'inspection par spectre Raman comprend :
le fait de commuter la lumière d'excitation émise par le laser vers un deuxième trajet optique d'éclairage dans un module optique et le fait de guider la lumière d'excitation vers l'objet liquide à inspecter par le biais du deuxième trajet optique d'éclairage et le fait de recueillir la lumière diffusée par Raman provenant de l'objet liquide à inspecter par le trajet optique de collecte afin de générer un spectre Raman de l'objet liquide à inspecter, et
le fait de comparer le spectre Raman généré de l'objet liquide à inspecter avec des spectres Raman de référence dans deuxième bibliothèque de spectres Raman de référence afin d'identifier l'objet liquide à inspecter, et
dans lequel le premier trajet optique d'éclairage et le trajet optique de collecte partagent au moins partiellement un axe optique commun, et le deuxième trajet optique d'éclairage a un axe optique dévié de l'axe optique du trajet optique de collecte, dans lequel
la première bibliothèque de spectres Raman de référence est établie sur la base de liquide de référence dans un conditionnement transparent et la deuxième bibliothèque de spectres Raman de référence est établie sur la base de liquide de référence dans un conditionnement semi-transparent ou opaque.

13. Procédé d'identification d'objet liquide selon la revendication 12, dans lequel la première bibliothèque de spectres Raman de référence est différente de la deuxième bibliothèque de spectres Raman de référence.
